Europäisches Patentamt

European Patent Office

Office européen des brevets

(11) Publication number: **0 107 268**
**B1**

(12) EUROPEAN PATENT SPECIFICATION

(45) Date of publication of patent specification: 23.11.88

(21) Application number: 83303716.1

(22) Date of filing: 28.06.83

(51) Int. Cl.⁴: **C 04 B 41/45,** C 04 B 35/56, C 04 B 35/58

(54) Method of providing a reinforced shaped ceramic body.

(30) Priority: 28.08.82 JP 149786/82

(43) Date of publication of application:
02.05.84 Bulletin 84/18

(45) Publication of the grant of the patent:
23.11.88 Bulletin 88/47

(84) Designated Contracting States:
BE DE FR GB IT

(56) References cited:
DE-A-2 930 211
FR-A-2 344 512
GB-A- 809 833

(73) Proprietor: NGK INSULATORS, LTD.
2-56, Suda-cho, Mizuho-ku
Nagoya-shi, Aichi 467 (JP)

(72) Inventor: Matsuhisa, Tadaaki
115-7 Town-Ishiodai 2, Ishiodai 1-chome
Kasugai City (JP)

(74) Representative: Paget, Hugh Charles Edward
et al
MEWBURN ELLIS & CO. 2/3 Cursitor Street
London EC4A 1BQ (GB)

EP 0 107 268 B1

Courier Press, Leamington Spa, England.

# EP 0 107 268 B1

## Description

The present invention relates to a method of providing a reinforced shaped ceramic body, for example a ceramics useful as structural material.

Silicon ceramics (such as silicon nitride, silicon carbide, sialon, etc.), zirconia and ceramics having a low coefficient of thermal expansion, such as cordierite etc. have excellent heat resistance and thermal shock resistance. Therefore these ceramics have become of interest as structural materials, such as for engine parts of gas turbine or internal combustion engines. However, these ceramics have brittleness. If there are large defects in the surface or the inner portion, stress concentrates at the defects under operation and breakage occurs at the defects. Thus the strength of the body is reduced. Particularly, when ceramics are shaped by an injection molding process, an extrusion molding process or the like, the strength of the sintered bodies is liable to be noticeably reduced due to unevenness, cavities or cracks formed on the surface of the shaped body.

In order to solve these problems, the following processes have been hitherto proposed. Either (i) a glaze is coated on the surface of the shaped body and the coated shaped body is fired to form a compressed layer on the surface of the sintered body, or (ii) the surface of the sintered body is coated by a CVD process (chemical vapour deposition), or (iii) the sintered body is re-fired at a high temperature to round the crack tips. However, the process of coating a glaze has the defects that a glass layer having a low melting point and being different in the composition from the ceramic shaped body, is formed on the surface of the sintered body, so that the shaped body cannot be used at a high temperature and furthermore the difference of the thermal expansion between the material of the shaped body and the glass layer is large and therefore when a thermal shock is experienced, the glass layer is readily separated. The CVD process is expensive and in the re-firing process it is difficult to achieve the complete removal of cracks, some of which remain, so that the strength cannot be highly increased.

The present invention is intended to reduce or remove these defects and problems. The invention consists in a method of providing a reinforced ceramics, especially one to be used as a structural material, which comprises coating on a surface of a shaped ceramic body a slip which has substantially the same chemical composition as the shaped body and has after firing a thermal expansion coefficient at 800°C of not more than 0.1% different from that of the shaped body, drying the slip-coated shaped body, subjecting said body to a hydrostatic pressing operation and then firing said body.

Thus, in the method of the present invention, fine cracks and uneven portions present on the surface of the ceramic shaped body are filled with a coating substance which has substantially the same chemical composition as the shaped body and has at most a very small difference of thermal expansion coefficient, the shaped body so treated is subjected to hydrostatic pressure and then fired, whereby the defects of the fine cracks and uneven portions are removed, improving the mechanical strength of the body.

The steps of the present invention will be illustrated and explained in more detail below.

First the shaped ceramic body is provided.

Silicon nitride, silicon carbide, sialon, zirconia, alumina, cordierite, magnesium aluminium titanate and substances capable of forming these compounds through firing are examples of suitable materials; preferred are silicon ceramics, such as silicon nitride, silicon carbide or substances capable of forming these silicon ceramics through firing.

The chosen material is shaped into a desired form. For this, use may be made of extrusion, pressing, slip casting, injection molding or the like, which processes are generally used for shaping ceramics. If necessary, the shaped body is pre-fired or preferably the surface of the pre-fired body is abraded to a depth of about 50—500 μm to remove the surface layer. The pre-firing is conducted in order to provide strength so as to render the abrasion and handling easy, the pre-firing temperature being such that shrinkage of the shaped body due to the pre-firing does not substantially occur, for example being less than 1%.

Then, on the surface of the raw or clacined ceramic shaped body is coated a slip which has substantially the same chemical composition as the shaped body and differs by not more than 0.1% in thermal expansion coefficient at 800°C, after firing. The slip may contain a molding aid, such as a binder, a deflocculant, a mixing medium such as water, an organic solvent, etc. in addition to a substance capable of forming substantially the same chemical composition as the ceramic shaped body through firing. The process for coating the slip may be a spray process, a brushing process, or an immersion process. A spray process is preferred because the thickness of the coated layer can be controlled and the coating can be conducted to a uniform thickness.

It is preferable to perform the coating so that the thickness of the coated layer is in the range 10 μm—500 μm, preferably 50 μm—200 μm, after firing. If the thickness of the coated layer after firing is less than 10 μm, it may be impossible satisfactorily to fill the defects on the surface of the shaped body, so that the strength of the body is not adequately increased, while if this thickness is more than 500 μm, the effect of increasing strength may be substantially lost.

After the slip is coated on the surface of the ceramic shaped body, it is dried to remove water or the organic solvent and the whole of the shaped body is covered with an elastic sheet, such as latex rubber and subjected to hydrostatic pressing. The hydrostatic pressing is carried out at a pressure which is higher than the pressure applied when the shaped body is formed, typically at a pressure in the range of 500—5000 kg/cm$^2$, more preferably 1,000—3,000 kg/cm$^2$. The elastic sheet is then removed from the surface of the

2

shaped body and, if necessary, the shaped body is heated to remove the molding aid and the like. Then the shaped body is fired under the conditions conforming to the desired quality and composition of the ceramics. When a substance which forms silicon nitride, silicon carbide, sialon or the like through firing is used as the raw material for the ceramics, the firing atmosphere as well as the firing temperature are very important.

The difference of thermal expansion coefficient at 800°C between the shaped body and the slip after firing is defined to be not more than 0.1%, because if this difference exceeds 0.1%, the coated layer is readily separated from the shaped body by a heat cycle.

The following examples are given for the purpose of illustration of this invention and are not intended as limitations thereof.

Example 1

77 parts by weight of $Si_3N_4$ powder having an average grain size of 0.5 µm, 2 parts by weight of SrO, 4 parts by weight of MgO and 2 parts by weight of $CeO_2$ as sintering aids, and 15 parts by weight of paraffin wax were mixed to prepare a raw batch material for the ceramics. From this raw batch material, three turbine rotors having a maximum diameter of the blade portion of 85 mm and a total length of 100 mm were manufactured by an injection molding process.

To a powder of $Si_3N_4$, SrO, MgO and $CeO_2$ in the same proportions as set out above were added 3% by weight of methyl cellulose and 80% by weight of water, to prepare a slip having substantially the same composition as the shaped rotors.

The three turbine rotors were gradually heated to 500°C to remove paraffin wax and then were pre-fired at 1,100°C for 30 minutes to give them a certain degree of strength. They were then subjected to hydrostatic pressing under a pressure of 1000 kg/cm².

The slip was coated on the surface of one of the pre-fired rotors so that the coated layer after firing had the thickness given in the following Table 1, and the coated rotor was dried and covered with latex rubber and subjected to hydrostatic pressing under a pressure of 2500 kg/cm². The rotor so treated was heated at 450°C for one hour to remove the binder and fired at 1,700°C for one hour under nitrogen to obtain the turbine rotor No. 1 of Table 1. The surface of a second pre-fired rotor was abraded to a thickness of 300 µm to remove the surface layer, and the slip was coated on the abraded rotor in the same manner as for Sample 1 so that the layer after firing had the thickness shown in Table 1 for Sample 2. Then, the slip coated rotor was dried and covered with a latex rubber and subjected to hydrostatic pressing under a pressure of 2500 kg/cm² and fired under the same conditions as Sample 1 above to obtain the turbine rotor No. 2 of Table 1.

For comparison, the third pre-fired rotor was not coated with the slip, and was fired at 1,700°C for one hour under nitrogen to prepare the comparative Sample No. 3 of Table 1.

The three turbine rotors so obtained were balanced to equalize their degrees of unbalance, and a spin test was carried out by means of a spin tester. The results are shown in Table 1.

|  | Sample No. | Slip layer | Thickness of the coated layer after firing | Rotation number at breakage (rotation per minute) |
|---|---|---|---|---|
| Present invention | 1 | Provided | 200 µm | 120,000 |
|  | 2 | Provided (coating after the surface layer is removed) | 80 µm | 138,000 |
| Comparative sample | 3 | Not provided | — | 52,000 |

As can be seen from the results of Table 1, the rotor No. 3 not having the slip coated on its surface, was broken at a rotation number of 52,000 per minute, while the rotors Nos. 1 and 2, in which the slip having the same composition was coated on the surface by the method of the present invention, endured to a rotation number of more than 100,000 per minute. Thus a remarkable improvement of strength has been obtained. The difference of thermal expansion coefficient at 800°C between the slip which has been dried, subjected to hydrostatic pressing under a pressure of 2500 kg/cm² and then fired, and the fired turbine rotor not coated with the slip was 0.01%.

After breakage, the turbine rotors No. 1 and No. 2 were cut and the surface portion was observed with a microscope. The coating portions formed from the slip were colored somewhat more black than the shaped body itself but were completely integrated with the shaped body.

3

**EP 0 107 268 B1**

Example 2

77 parts by weight of SiC powder having a grain size of 1 µm, 1.5 parts by weight of boron, 2.3 parts by weight of carbon and 19.2 parts by weight of wax were mixed to prepare a raw batch material for a ceramics. From this raw batch material, two turbine blades having a length of 50 mm were manufactured by an injection molding process. These blades were each heated at 500°C for 20 hours to remove the wax, covered with a latex bag and subjected to hydrostatic pressing under a pressure of 1500 kg/cm² to obtain shaped bodies.

To a mixture of SiC powder, boron and carbon of the same composition were added 0.5% by weight of sodium alginate and 50% by weight of ethyl alcohol to prepare a slip having substantially the same composition as the two shaped blades. The slip was brushed onto the surfaces of the two blades to a thickness of 400 µm. One of them was dried as such and fired at 2,200°C for one hour in argon, and the other was dried and put in a latex bag and subjected to hydrostatic pressing under a pressure of 3500 kg/cm² and then fired at 2,200°C in argon for one hour.

On testing, the turbine blade not subjected to hydrostatic pressing after drying suffered separation of the slip coated layer, while in the turbine blade according to the present invention which was subjected to hydrostatic pressing, the coated layer was strongly bonded to the shaped body and completely integrated therewith. The difference of thermal expansion coefficient at 800°C between the slip coated on the shaped body which has been subjected to hydrostatic pressing under a pressure of 3500 kg/cm² after drying and then fired and the fired turbine blade, which was not coated with the slip, was 0.02%.

To summarize, in the method for providing a reinforced ceramics according to the present invention, a slip which, at least after firing, has substantially the same chemical composition as the ceramic shaped body and has a very small difference of thermal expansion coefficient is coated on the surface of the ceramic shaped body, the body is subjected to hydrostatic pressing and then fired. As a result, there is substantially no difference in the thermal expansion coefficient between the coated layer and the shaped body and the coated layer is integrally and strongly bonded to the shaped body, whereby the coated layer is not separated from the shaped body even when subjected to heat cycling and the slip fills the cracks and cavities present on the surface of the shaped body, so that the size and number of defects which cause the breakage are noticeably decreased. In this way, the mechanical strength of the ceramic shaped body can be remarkably improved. The present invention is very effective when the fired body is directly used as a fired face and is useful to produce various ceramic parts, such as ceramic gas turbine engine parts, for example a vane, blade or axial turbine rotor, or other ceramic engine parts, for example a turbocharger rotor, a pressure wave type supercharger rotor, etc.

**Claims**

1. A method of providing a reinforced ceramics article, characterized by coating a shaped ceramic body with a slip which, at least after firing has substantially the same chemical composition as the shaped body and after firing differs by not more than 0.1% in thermal expansion coefficient at 800°C, drying the coated shaped body, subjecting the coated shaped body to hydrostatic pressing and firing the coated shaped body.

2. A method as claimed in claim 1, wherein the shaped body is a turbine rotor.

3. A method as claimed in claim 1, wherein the shaped body is a turbine blade.

4. A method as claimed in any one of claims 1 to 3 wherein the shaped ceramic body is formed of one of the compounds silicon nitride, silicon carbide, sialon, zirconia, alumina, cordierite and magnesium aluminium titanate or of a substance capable of forming one such compound on firing.

**Patentansprüche**

1. Verfahren zur Herstellung eines verstärkten Keramikgegenstandes, dadurch gekennzeichnet, daß ein geformter Keramikkörper mit einem Schlamm überzogen wird, der zumindest nach dem Brennen im wesentlichen die gleiche Zusammensetzung wie der geformte Körper hat und dessen Wärmeausdehnungskoeffizient bei 800°C nach dem Brennen um nicht mehr als 0,1% abweicht, daß der überzogene geformte Körper gebrannt wird, daß der überzogene geformte Körper einer hydrostatischen Druckbelastung ausgesetzt wird und daß der überzogene geformte Körper gebrannt wird.

2. Verfahren nach Anspruch 1, wobei der geformte Körper ein Turbinenrotor ist.

3. Verfahren nach Anspruch 1, wobei der geformte Körper eine Turbinenschaufel ist.

4. Verfahren nach einem der Ansprüche 1 bis 3, wobei der geformte Keramikkörper aus einem der Bestandteile Siliconnitrid, Siliconcarbid, Sialon, Zirconium, Aluminium, Cordierit und Magnesiumaluminiumtitanat oder aus einer Substanz, die beim Brennen einen solchen Bestandteil bilden kann, geformt ist.

**Revendications**

1. Procédé de fabrication d'un article céramique renforcé, caractérisé en ce qu'on enduit un corps céramique formé d'un engobe qui, au moins après cuisson, a sensiblement la même composition chimique

4

que le corps formé et, après cuisson, diffère de pas plus de 0,1%, en coefficient de dilatation thermique à 800°C, on sèche le corps formé enduit, on soumet le corps formé enduit à une pression hydrostatique et on cuit le corps formé enduit.

2. Procédé selon la revendication 1, où le corps formé est un rotor de turbine.

3. Procédé selon la revendication 1, où le corps formé est une pale de turbine.

4. Procédé selon l'une quelconque des revendications 1 à 3, où le corps céramique formé est formé de l'un des composés nitrure de silicium, carbure de silicium, sialon, zircone, alumine, cordiérite et titanate de magnésium aluminium ou d'une substance capable de former un tel composé à la cuisson.